# EUROPEAN PATENT APPLICATION

(11) **EP 4 596 213 A1**
(43) Date of publication of application: **06.08.2025**
(21) Application number: 24834221.4
(22) Date of filing: 15.03.2024
(51) Int. Cl.: B29C 45/16, B29C 45/17, B29L 11/00

(54) **INJECTION MOLDING DEVICE FOR THICK-WALL LIGHT GUIDE AND INJECTION MOLDING METHOD FOR THICK-WALL LIGHT GUIDE**

(30) Priority: 06.12.2023 CN 202311666599
(71) Applicant: Yizumi Precision Machinery (Suzhou) Co., Ltd, Suzhou, Jiangsu 215299 (CN); Yizumi Holdings Co., Ltd., Foshan, Guangdong 528000 (CN)
(72) Inventor: Hou, Yongping, Suzhou, Jiangsu 215299 (CN); Zheng, Hao, Suzhou, Jiangsu 215299 (CN); Qi, Mingchao, Suzhou, Jiangsu 215299 (CN)
(74) Representative: Osterhoff, Utz
(86) International application number: PCT/CN2024/082017
(87) International publication number: WO 2025/118433

(57) **Abstract**

The present application discloses an injection molding device and an injection molding method for a thick-walled light guide element, relating to the technical field of injection molding. The device includes an injection assembly, a fixed mold plate and a movable mold plate. The injection assembly is configured to melt and inject plastic material. The fixed mold plate is provided with at least two injection stations along a horizontal direction, and the injection assembly is configured to inject the plastic material into the injection stations. The movable mold plate is provided with a rotary plate assembly, and the rotary plate assembly is configured to drive the mold to rotate at a fixed angle each time to form N molding stations. The injection stations are configured to supply plastic material to each molding station to form each layer of the thick-walled light guide element, the Nth molding station is configured to form an Nth layer of the thick-walled light guide element, the Nth layer of the thick-walled light guide element formed at the Nth molding station covers an (N-1)th layer of the thick-walled light guide element formed at an (N-1)th molding station, the Nth layer of the thick-walled light guide element is integrated with the (N-1)th layer of the thick-walled light guide element.

## Description

### CROSS-REFERENCE TO RELATED APPLICATIONS

The present application claims priority to Chinese patent application No. 202311666599.8, and filed on December 6, 2023, the entire contents of which are incorporated herein by reference.

### TECHNICAL FIELD

The present application relates to the technical field of injection molding, and in particular to an injection molding device and an injection molding method for a thick-walled light guide element.

### BACKGROUND

The thick-walled light guide element is capable of guiding and diffusing the light emitted by the light source to all directions, and is increasingly used in various products. Taking the automobile as an example, the thick-walled light guide element is a crucial component in car lights. They can export the light emitted by the car light source into the parallel light to meet the lighting requirements of the car lights.

The thick-walled light guide element is usually formed by injection molding. In order to shorten the molding cycle, by layered injection molding, the injection molding is performed on the thick-walled light guide element. The more layers, the shorter the molding cycle and the higher the production efficiency. Currently, the commonly used two-color injection molding machine can only divide the thick-walled light guide element into two layers and inject them separately, so that the production efficiency is not significantly improved.

### SUMMARY

The main purpose of the embodiments of the present application is to provide an injection molding device for a thick-walled light guide element, aiming to solve the technical problem that the current injection molding method for the thick-walled light guide element has a limited number of layers and does not significantly improve production efficiency.

In order to achieve the above objectives, the technical solutions adopted in the present application are as follows.

An injection molding device for the thick-walled light guide element includes:
an injection assembly configured to melt and inject plastic material;
a fixed mold plate provided with at least two injection stations along a horizontal direction, where the injection assembly is configured to inject the plastic material into the at least two injection stations; and
a movable mold plate provided with a rotary plate assembly, where a mold is installed at the rotary plate assembly, the rotary plate assembly is configured to drive the mold to rotate at a fixed angle to form a first molding station to an Nth molding station, N is a natural number greater than 1, and a cumulative rotation angle of the rotary plate assembly is 360 °,
where the at least two injection stations are configured to supply the plastic material to each molding station to produce each layer of the thick-walled light guide element, the Nth molding station is configured to form an Nth layer of the thick-walled light guide element, the Nth layer of the thick-walled light guide element formed at the Nth molding station covers an (N-1)th layer of the thick-walled light guide element formed at an (N-1)th molding station, the Nth layer of the thick-walled light guide element is integrated with the (N-1)th layer of the thick-walled light guide element.

Further, the first molding station to the Nth molding station are respectively provided with a first mold cavity to an Nth mold cavity, and the first mold cavity to the Nth mold cavity are respectively configured to produce a layer of the thick-walled light guide element, and the at least two injection stations are configured to inject the plastic material into the first mold cavity to the Nth mold cavity through a hot runner of the mold.

Further, a depth of the first mold cavity gradually increases to a depth of the Nth mold cavity.

Further, the injection assembly includes a first injection mechanism and a second injection mechanism, and the injection stations include a first injection station and a second injection station; the first injection mechanism is configured to inject the plastic material into the first injection station, and the second injection mechanism is configured to inject the plastic material into the second injection station; and
the first injection station is communicated with the first molding station and the Nth molding station, and a second injection station is communicated with a second molding station to the (N-1)th molding station.

Further, the first molding station to the Nth molding station is equally distributed in a peripheral direction.

Further, each layer of the thick-walled light guide element rotates with the rotary plate assembly.

Further, the rotary plate assembly includes a rotary plate body, a driving assembly and a positioning assembly; and the mold is installed at the rotary plate body, and the driving assembly is connected to the rotary plate body, the driving assembly is configured to drive the rotary plate body to rotate, and the positioning assembly is configured to abut against the rotary plate body in response to that the rotary plate body rotates to a preset position, to prevent the rotary plate body from rotating.

Correspondingly, the present application further provides an injection molding method for a thick-walled light guide element, applied to an injection molding device for the thick-walled light guide element as mentioned above, and the injection molding method for a thick-walled light guide element includes following steps:
S1, injecting, by an injection assembly, molten plastic material into a first molding station to produce a first layer of the thick-walled light guide element;
S2, driving, by a rotary plate assembly, a mold at m degrees along a first direction;
S3, injecting, by the injection assembly, molten plastic material into an (M+1)th molding station to produce an (M+1)th layer of the thick-walled light guide element, where M is a cumulative rotating number of the rotary plate assembly; and
S4, repeating above steps S2 to S3 until M+1=N.

Further, the first molding station to the Nth molding station are respectively provided with a first mold cavity to an Nth mold cavity, the first mold cavity to the Nth mold cavity are respectively configured to produce a layer of the thick-walled light guide element, and at least two injection stations are configured to inject the plastic material into the first mold cavity to the Nth mold cavity through a hot runner of the mold, a depth of the first mold cavity gradually increases to a depth of the Nth mold cavity, each layer of the thick-walled light guide element rotates with the rotary plate assembly;
the step S1, injecting, by the injection assembly, molten plastic material into the first molding station includes:
S11, injecting, by the injection assembly, molten plastic material into the first mold cavity, and
the step S3, injecting, by the injection assembly, molten plastic material into the (M+1)th molding station includes:
   S31, injecting, by the injection assembly, molten plastic material into the first mold cavity, and injecting molten plastic material into a mold cavity from the second mold cavity to the Nth mold cavity where a thick-walled light guide layer is present.

Further, the first mold cavity to the Nth mold cavity are equally distributed along a peripheral direction, and
after the step S4, repeating above steps S2 to S3 until M+1=N, includes:
S5, taking out a thick-walled light guide product in the Nth mold cavity;
S6, driving, by the rotary plate assembly, the mold at m degrees along the first direction, and injecting, by the injection assembly, molten plastic material into the first mold cavity to the Nth mold cavity; and
S7, repeating above steps S5 to S6.

Compared with the related art, the beneficial effects of this application are as follows.

The injection molding device for the thick-walled light guide element in the present application can form multiple molding stations by arranging the rotary plate assembly at the movable mold plate and using the rotary plate assembly to drive the movable mold plate to rotate relative to the fixed mold plate. In this way, the injection assembly can be used to inject molten plastic material into each molding station through the injection station at the fixed mold plate. Each time the mold rotates at a fixed angle, an injection is performed. During each injection, a layer of thick-walled light guide element can be formed on the mold. When the mold rotates for N times at a fixed angle, a thick-walled light guide product with N layers can be formed at the mold, thereby realizing the multi-layer injection of the thick-walled light guide element, which is not limited to the conventional two-layer injection molding method. In this way, not only the overall molding cycle can be shorten, but also the production cost can be reduced.

### BRIEF DESCRIPTION OF THE DRAWINGS

To more clearly illustrate technical solutions in the embodiments of the present application or the related art, the following will briefly introduce the drawings that need to be used in the description of the embodiments or the related art. Obviously, the drawings in the following description are only some embodiments of the present application. For those skilled in the art, without creative effort, other drawings can be obtained according to the structures shown in these drawings.
FIG. 1 is a schematic diagram of the overall structure of an injection molding device for a thick-walled light guide element according to an embodiment of the present application.
FIG. 2 is a schematic structural diagram of a fixed mold plate of the injection molding device for the thick-walled light guide element according to an embodiment of the present application.
FIG. 3 is a schematic structural diagram of an injection assembly of the injection molding device for the thick-walled light guide element according to an embodiment of the present application.
FIG. 4 is a schematic structural diagram of a rotary plate assembly of the injection molding device for the thick-walled light guide element according to an embodiment of the present application.
FIG. 5 is a schematic diagram of an injection molding process of an injection molding method for the thick-walled light guide element according to an embodiment of the present application.
FIG. 6 is a schematic diagram of operating steps of the injection molding method for the thick-walled light guide element according to an embodiment of the present application.
FIG. 7 is a schematic diagram of operating steps of the injection molding method for the thick-walled light guide element according to another embodiment of the present application.

### Description of reference numbers:

| Reference number | Name | Reference number | Name |
|---|---|---|---|
| 1 | first layer of the thick-walled light guide element | 110 | first injection mechanism |
| 2 | second layer of the thick-walled light guide element | 120 | second injection mechanism |
| 3 | third layer of the thick-walled light guide element | 210 | injection station |
| 4 | fourth layer of the thick-walled light guide element | 211 | first injection station |
| 5 | fifth layer of the thick-walled light guide element | 212 | second injection station |
| 6 | sixth layer of the thick-walled light guide element | 410 | rotary plate body |
| 100 | injection assembly | 420 | driving assembly |
| 200 | fixed mold plate | 430 | positioning assembly |
| 300 | movable mold plate | 610 | fixed mold |
| 400 | rotary plate assembly | 620 | movable mold |
| 500 | machine platform | 611 | fixed mold cavity |
| 600 | mold | 621 | movable mold cavity |

The realization of the objective, functional characteristics, and advantages of the present application are further described with reference to the accompanying drawings.

### DETAILED DESCRIPTION OF THE EMBODIMENTS

The technical solutions of the embodiments of the present application will be described in detail below with reference to the accompanying drawings. It is obvious that the embodiments described are only some rather than all of the embodiments of the present application. All other embodiments obtained by those skilled in the art based on the embodiments of the present application without creative efforts shall fall within the claimed scope of the present application.

It should be noted that all the directional indications (such as up, down, left, right, front, rear...) in the embodiments of the present application are only used to explain the relative positional relationship, movement, or the like of the components in a certain posture. If the specific posture changes, the directional indication will change accordingly.

Besides, the descriptions associated with, e.g. "first" and "second," in the present application are merely for descriptive purposes, and cannot be understood as indicating or suggesting relative importance or impliedly indicating the number of the indicated technical feature. Therefore, the feature associated with "first" or "second" can expressly or impliedly include at least one such feature. Further, if "and/or" appears throughout the text, it includes three parallel schemes. Taking "A and/or B" as an example, it includes the scheme A, or the scheme B, or the scheme that the scheme A and the scheme B satisfy simultaneously. In addition, the technical solutions of the various embodiments can be combined with each other, but the combinations must be based on the realization of those skilled in the art. When the combination of technical solutions is contradictory or cannot be achieved, it should be considered that such a combination of technical solutions does not exist, nor does it fall within the scope of the present application.

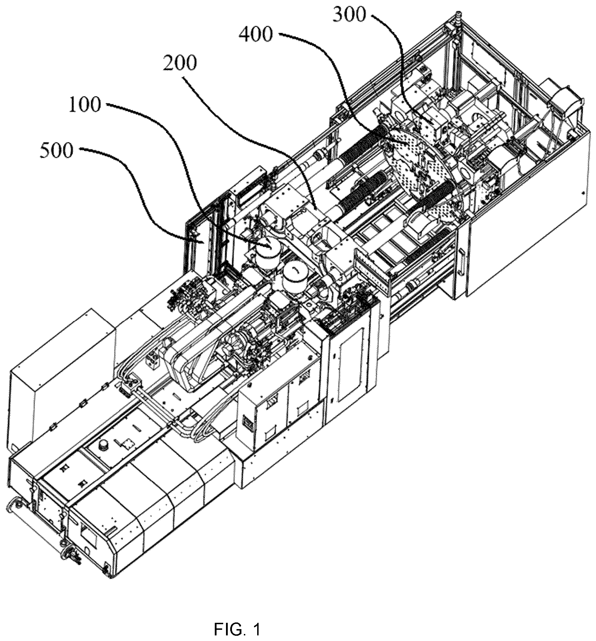

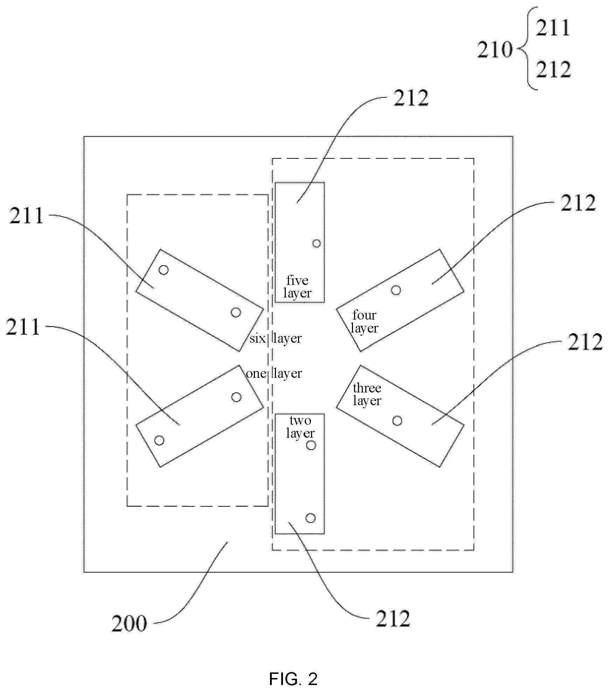

Embodiments of the present application provide an injection molding device for the thick-walled light guide element. As shown in FIG. 1 and FIG. 2, the injection molding device for the thick-walled light guide element includes an injection assembly 100, a fixed mold plate 200 and a movable mold plate 300.

The injection assembly 100 is configured to melt and inject plastic material.

The fixed mold plate 200 is provided with at least two injection stations 210 along a horizontal direction, and the injection assembly 100 is configured to inject the plastic material into the at least two injection stations 210.

The movable mold plate 300 is provided with a rotary plate assembly 400, and a mold 600 is installed at the rotary plate assembly 400. The rotary plate assembly 400 is configured to drive the movable mold 620 to rotate at a fixed angle to form a first molding station to an Nth molding station, N is a natural number greater than 1, and a cumulative rotation angle of the rotary plate assembly is 360 °.

The at least two injection stations 210 are configured to supply the plastic material to each molding station to form each layer of the thick-walled light guide element. The Nth molding station is configured to form an Nth layer of the thick-walled light guide element, the Nth layer of the thick-walled light guide element formed at the Nth molding station covers an (N-1)th layer of the thick-walled light guide element formed at an (N-1)th molding station, the Nth layer of the thick-walled light guide element is integrated with the (N-1)th layer of the thick-walled light guide element, and the Nth layer of the thick-walled light guide element is integrated with the (N-1)th layer of the thick-walled light guide element.

The injection molding device for the thick-walled light guide element in this embodiment can be used on an injection molding equipment. The fixed mold plate 200 and the movable mold plate 300 may respectively refer to the fixed mold plate and the movable mold plate at the injection molding equipment. The injection assembly 100 may include a needle valve assembly and an injection platform assembly. The injection platform assembly is provided at the machine platform 500 of the injection molding equipment and is connected to the needle valve assembly. The needle valve assembly is connected to each injection station 210. The injection platform assembly can inject molten plastic material into at least two injection stations 210 simultaneously through the needle valve assembly.

It should be noted that the position of the molding station is fixed and does not change with the rotation of the mold 600. The mold 600 is provided with corresponding molding cavities. Since the position of the molding station is fixed, for any molding cavity, when the mold 600 is driven by the rotary plate assembly 400 to rotate at a fixed angle, the molding cavity will move from one molding station to the next molding station as the mold 600 rotates. The injection station 210 supplies plastic materials to the molding station, which can be understood as that the injection station 210 supplies plastic materials into the molding cavity located at the molding station.

Based on the above settings, when the mold 600 is provided with multiple molding cavities, any or all of the molding cavities can correspond to the above-mentioned molding stations one-to-one. When the injection assembly 100 supplies the plastic materials to each molding station for the first time through the injection station 210, a layer of the thick-walled light guide element can be formed in each molding cavity corresponding to each molding station. After the layer of the thick-walled light guide element is cooled, the rotary plate assembly 400 drives the movable mold 620 to rotate at a fixed angle, so that each molding cavity moves to the next molding station. Then the injection assembly 100 continues to supply plastic materials to each molding station for the second time through the injection station 210. Since a layer of the thick-walled light guide element has been molded in the molding cavity, a second layer of the thick-walled light guide element can be formed in each molding cavity with the second supply of plastic materials. The second layer of the thick-walled light guide element covers the surface of the previous layer of the thick-walled light guide element. After the layer of the wall light guide element is cooled, the second layer of the thick-walled light guide element will be integrated with the previous layer of the thick-walled light guide element. The rotary plate assembly 400 continues to drive the movable mold 620 to rotate at a fixed angle along the same direction, so that each molding cavity moves to the next molding station, and then the injection assembly 100 continues to supply plastic materials to each molding station for the third time through the injection station 210. Since two layers of the thick-walled light guide element have been molded in the molding cavity, a third layer of the thick-walled light guide element can be formed in each molding cavity with the third supply of the plastic materials. The third layer of the thick-walled light guide element covers the surface of the first two layers of the thick-walled light guide element. After the layer of the thick-walled light guide element cools, the third layer of the thick-walled light guide element will be integrated with the first two layers of the thick-walled light guide element. The rotary plate assembly 400 continues to drive the movable mold 620 to rotate at a fixed angle along the same direction and the above layered injection molding operations will be repeated until a thick-walled light guide product including N layers of the thick-walled light guide element is molded in the molding cavity of the Nth molding station. In this case, the thick-walled light guide product can be taken out from the molding cavity.

After the injection molding of each layer of the thick-walled light guide element is finished, the pressure of the layer of the thick-walled light guide element can be maintained to prevent the injected plastic material from flowing back and causing product deformation. In addition, the shape of each layer of the thick-walled light guide element can be different to meet the overall shape requirements of the product.

It should be noted that based on the injection molding device for the thick-walled light guide element in this embodiment, the thick-walled light guide element can be divided into two or more layers for injection molding respectively, for example, it can be divided into six layers, seven layers, eight layers, and the like. Compared with the existing two-color injection molding machine, the number of layers is larger and the thickness of each layer is correspondingly reduced, so the cooling time required after each layer is molded can be shortened. In this way, there can set two or more than two injection stations 210. Through the cooperation of multiple injection stations 210, rapid supply of molten plastic materials can be achieved and injection molding efficiency can be improved.

The above injection molding process is only used to illustrate the molding principle of the injection molding device for the thick-walled light guide element in this embodiment. In actual application, the operation process can be adjusted adaptively based on the injection molding requirements, as long as the multi-layer injection molding process of the thick-walled light guide element is finally finished and the thick-walled light guide product is obtained, which will not be limited here.

It can be seen that the injection molding device for the thick-walled light guide element in this embodiment can form multiple molding stations by arranging the rotary plate assembly 400 at the movable mold plate 300 and using the rotary plate assembly 400 to drive the movable mold 620 to rotate relative to the fixed mold plate 200. In this way, the injection assembly 100 can be used to inject molten plastic material into each molding station through the injection station 210 on the fixed mold plate 200. Each time the mold 600 rotates at a fixed angle, one injection is performed. During each injection, a layer of the thick-walled light guide element can be formed on the mold 600. When the mold 600 rotates for N times at a fixed angle, a thick-walled light guide product with N layers can be formed on the mold 600, thereby realizing the multi-layer injection of the thick-walled light guide element, which is not limited to the conventional two-layer injection molding method. In this way, not only the overall molding cycle can be shorten, but also the production cost can be reduced.

In an embodiment, as shown in FIG. 1 and FIG. 2, N the molding stations are respectively provided with the first mold cavity to the Nth mold cavity, and the first mold cavity to the Nth mold cavity are respectively configured to mold a layer of the thick-walled light guide element. At least two injection stations 210 inject the plastic material into the first mold cavity to the Nth mold cavity through the hot runner of the mold 600.

In an embodiment, as shown in FIG. 1 and FIG. 2, a depth of the first mold cavity to a depth of the Nth mold cavity shows a gradually increasing trend.

In an embodiment, as shown in FIG. 1 and FIG. 2, each layer of the thick-walled light guide element rotates along with the rotary plate assembly 400.

In an embodiment, the first mold cavity to the Nth mold cavity in this embodiment may correspond to the molding cavities on the mold 600 as mentioned in the above embodiments. The depth of the first mold cavity to a depth of the Nth mold cavity shows a gradually increasing trend, which should be understood that the depth of the mold cavity is gradually increased along one or more directions, so that the shape of each mold cavity matches the outer contour of the layer of the thick-walled light guide element that needs to be molded in the mold cavity.

In practical applications, the mold 600 usually includes a fixed mold 610 and a movable mold 620, the fixed mold 610 is fixed at the fixed mold plate 200, and the movable mold 620 is fixed at the movable mold plate 300, so that the mold cavity may include a fixed mold cavity 611 provided at the fixed mold 610 and the movable mold cavity 621 provided at the movable mold 620. When the fixed mold 610 is clamped with the movable mold 620, the fixed mold cavity 611 and the movable mold cavity 621 can enclose to form a complete mold cavity for injection molding. Based on this structural arrangement, the depth of the first mold cavity gradually increases to the depth of the Nth mold cavity, which should be understood as the depth of the fixed mold cavity 611 gradually increases. In this way, the specific injection molding process of the thick-walled light guide element can be performed as follows.

In the initial state, there is no injection molding in all mold cavities. First, the fixed mold 610 is clamped with the movable mold 620, and then the first mold cavity with the shallowest depth is filled with plastic materials through the injection station 210, and the pressure of the first mold cavity with the shallowest depth is maintained, then the first mold cavity with the shallowest depth is cooled, to form the first layer 1 of the thick-walled light guide element in the first mold cavity. Then the fixed mold 610 is separated from the movable mold 620, and the movable mold 620 is driven to rotate at a fixed angle through the rotary plate assembly 400, so that the first layer 1 of the thick-walled light guide element can move to the second molding station along with the movable mold cavity 621. Then the fixed mold 610 is clamped with the movable mold 620, and the mold cavity where the first layer 1 of the thick-walled light guide element is located is the second mold cavity. Since the depth of the second mold cavity is deeper, an injection molding area is formed between the cavity wall of the second mold cavity and the first layer 1 of the thick-walled light guide element. The shape of the injection molding area corresponds to the outer contour of subsequent second layer 2 of the thick-walled light guide element. The mold cavity at the first molding station is still the first mold cavity. In this case, the first mold cavity and the second mold cavity are filled with plastic materials through the injection station 210, the pressure is maintained, and the first mold cavity and the second mold cavity are cooled to form a first layer 1 of the thick-walled light guide element in the first mold cavity, and form a second layer 2 of the thick-walled light guide element in the second mold cavity. The second layer 2 of the thick-walled light guide element in the second mold cavity covers the surface of the first layer 1 of the thick-walled light guide element and is integrated with the first layer 1 of the thick-walled light guide element. Then the fixed mold 610 is separated from the movable mold 620, and the movable mold 620 is driven to rotate at a fixed angle along the same direction through the rotary plate assembly 400. In this case, the two layers of the thick-walled light guide element in the second molding station move to the third molding station along with the mold cavity 621, and one layer of the thick-walled light guide element in the first molding station move to the second molding station along with the mold cavity 621, then the fixed mold 610 is clamped with the movable mold 620. After the molds 610 and 620 are clamped, the mold cavity where the two layers of the thick-walled light guide element at the third molding station are located is the third mold cavity. Since the depth of the third mold cavity is deeper, an injection molding area is formed between the cavity wall of the third mold cavity and the two layers of the thick-walled light guide element. The shape of the injection molding area corresponds to the outer contour of the subsequent third layer 3 of the thick-walled light guide element. In this case, the first mold cavity, the second mold cavity, and the third mold cavity are filled with plastic materials through the injection station 210, and the pressure is maintained, and the first mold cavity, the second mold cavity, and the third mold cavity are cooled, to form a first layer 1 of the thick-walled light guide element in the first mold cavity, a second layer 2 of the thick-walled light guide element in the second mold cavity, and a third layer 3 of the thick-walled light guide element in the third mold cavity. The third layer 3 of the thick-walled light guide element in the third mold cavity covers the surfaces of the first two layers of the thick-walled light guide element and is integrated with the first two layers of the thick-walled light guide element. The second layer 2 of the thick-walled light guide element in the second mold cavity covers the surface of the first layer 1 of the thick-walled light guide element and is integrated with the first layer 1 of the thick-walled light guide element. Then the molds 620 and 630 are separated and the movable mold 620 is driven to rotate at a fixed angle along the same direction through the rotary plate assembly 400, to repeat the above injection molding operation until the first mold cavity to the Nth mold cavity are filled with plastic materials. When the Nth mold cavity is molded with N layers of the thick-walled light guide element, and the N layers of the thick-walled light guide element constitute the thick-walled light guide product. The thick-walled light guide product can be taken out from the movable mold cavity 621 corresponding to the Nth molding station after the fixed mold 610 and the movable mold 620 are separated. Thus, the layered injection molding process of a thick-walled light guide element can be finished. After that, the rotary plate assembly 400 can drive the movable mold 620 to rotate at a fixed angle along the same direction, so that the (N-1)th layer of the thick-walled light guide element on the (N-1)th molding station moves to the Nth molding station. Then the molds are clamped and the above injection molding operations are repeated, so that the Nth layer of the thick-walled light guide element in the Nth mold cavity covers the surfaces of the previous (N-1)th layer of the thick-walled light guide element and is integrated with the previous (N-1)th layer of the thick-walled light guide element. In this case, the layered injection molding process of a thick-walled light guide element is finished in the Nth mold cavity, which can separate the molds and take out the thick-walled light guide product from the movable mold cavity 621 corresponding to the Nth molding station, and the above injection molding operation can be repeated subsequently. A thick-walled light guide product can be obtained every time the rotary plate assembly 400 rotates, thereby easily achieving layered injection molding and continuous production of the thick-walled light guide element.

The operation of taking out the thick-walled light guide product from the movable mold cavity 621 can be achieved with an ejection mechanism or a mechanical clamp, which is not limited here.

In an embodiment, as shown in FIG. 1 and FIG. 2, the first molding station to the Nth molding station are equally distributed along a peripheral direction.

Based on the previous embodiment, when the first molding station to the Nth molding station are equally distributed in the peripheral direction, the rotation angle of the rotary plate assembly 400 is 360°/N each time. The injection molding device for the thick-walled light guide element starts to operate from the initial state according to the injection molding process of the previous embodiment. When the first mold cavity to the Nth mold cavity are filled with plastic materials for the first time, it means that the rotary plate assembly 400 has rotated for one cycle. After the thick-walled light guide product is taken out from the movable mold cavity 621 corresponding to the Nth molding station, the movable mold cavity 621 is in the vacant state. In this case, the rotary plate assembly 400 continues to drive the movable mold 620 to rotate at a fixed angle, to make the vacant movable mold cavity 621 return to the first molding station to enter the next round of injection molding cycle. In the subsequent steps, only the above-mentioned injection molding processes of mold clamping, injection molding, mold separating, blanking, and rotation need to be repeated, and only need to fill all the mold cavities with plastic materials after each subsequent mold clamping. Based on the peripheral arrangement of the molding stations in this embodiment, the rotation cycle characteristics of the rotary plate assembly 400 can be fully utilized to achieve cyclic injection molding production of the thick-walled light guide element in a smaller space.

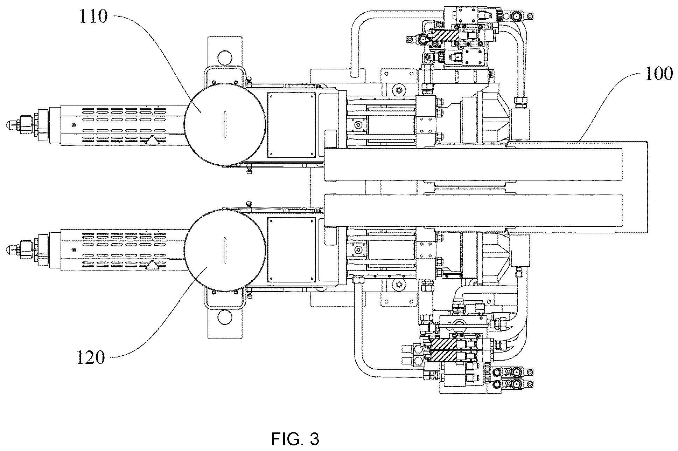

In an embodiment, as shown in FIG. 1 to FIG. 3, the injection assembly 100 includes a first injection mechanism 110 and a second injection mechanism 120, and the injection station 210 includes a first injection station 211 and a second injection station 212. The injection mechanism 110 is configured to inject the plastic material into the first injection station 211, and the second injection mechanism 120 is configured to inject the plastic material into the second injection station 212.

The first injection station 211 is connected to the first molding station to the Nth molding station, and the second injection station 212 is connected to the second molding station to the (N-1) molding station.

In this embodiment, the first injection mechanism 110 and the second injection mechanism 120 can be respectively set with different injection molding parameters to meet the injection molding requirements of each layer of the thick-walled light guide element. In an embodiment, the injection parameters may include injection pressure, etc. For example, the first injection mechanism 110 and the second injection mechanism 120 both include a needle valve body, the injection pressure of the needle valve body of the first injection mechanism 110 may be set to the pressure value A, and the injection pressure of the needle valve body of the second injection mechanism 120 can be set to the pressure value B. When a certain layer of the thick-walled light guide element requires an injection pressure value A, the first injection mechanism 110 is used for injection molding. When a certain layer of the thick-walled light guide element requires an injection pressure value B, the second injection mechanism 120 is used for injection molding.

For example, when the thick-walled light guide element is divided into six layers for injection molding, the first layer is located at the bottom and the sixth layer is located at the top. The first layer and the sixth layer jointly wrap the second layer, the third layer, the fourth layer, and the fifth layer. The injection parameters of the first and sixth layers are the same, and the injection parameters of the second, third, fourth and fifth layers are the same. In this way, the first layer and the sixth layer can be performed injection molding through the first injection mechanism 110, and the second to fifth layers can be performed injection molding through the second injection mechanism 120, thereby eliminating the parameter adjustment operations, improving the injection molding efficiency, and shortening the product molding cycle.

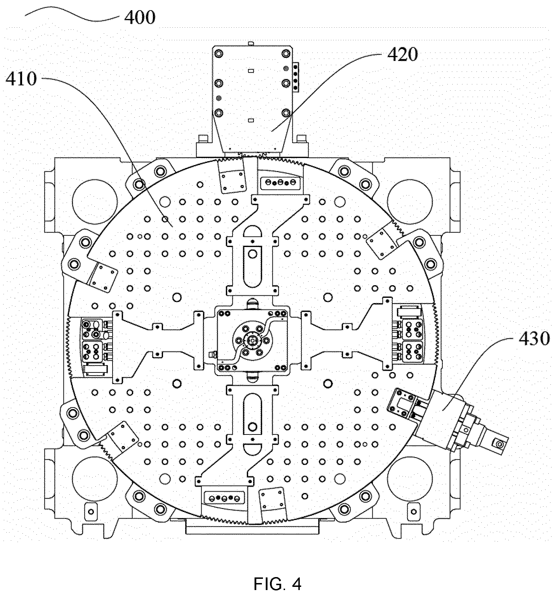

In an embodiment, as shown in FIG. 1 to FIG. 4, the rotary plate assembly 400 includes a rotary plate body 410, a driving assembly 420 and a positioning assembly 430. The mold 600 is installed at the rotary plate body 410, and the driving assembly 420 is connected to the rotary plate body 410. The driving assembly 420 is configured to drive the rotary plate body 410 to rotate. The positioning assembly 430 is configured to abut against the rotary plate body 410 when the rotary plate body 410 rotates to a preset position, to prevent the rotary plate body 410 from rotating.

In an embodiment, the driving assembly 420 may include a servo driver and a servo motor. The servo driver controls the rotation of the servo motor through electrical signals. The servo motor then drives the rotary plate body 410 to rotate through the gears, thus ensuring that the rotary plate body 410 accurately can rotate to a preset angle.

The rotary plate body 410 or the device that rotates synchronously with the rotary plate body 410 can be provided with a positioning groove that match the positioning assembly 430. The number of positioning grooves is consistent with the number of molding stations, and the positioning grooves are equally distributed along the circumference direction. When the rotary plate body 410 rotates to a preset angle, the positioning assembly 430 can be inserted into the corresponding positioning groove to lock the rotary plate body 410 and prevent the rotary plate body 410 from rotating, so that the injection molding operation can be accurately finished under stable working conditions. When one layer of injection molding is finished and the next layer needs to be performed injection molding, it is only necessary to disengage the positioning assembly 430 from the positioning groove and keep the rotary plate body 410 in a rotating state.

Further, the positioning assembly 430 may include a telescopic member and a latch. The telescopic member includes a fixed end and a telescopic end. The fixed end is provided at the base of the injection molding equipment, and the telescopic end telescopes toward the positioning groove. The latch is connected to the telescopic end. The extension and retraction of the latch can be controlled by the extension and retraction of the telescopic end. When the telescopic end controls the latch to extend, the latch is inserted into the positioning groove to lock the rotary plate body 410. **In** this case, the injection molding operation can be performed. When switching is required, the telescopic end first controls the latch to retract, allowing the movable mold plate to rotate at a fixed angle, and then the telescopic member controls the latch to be inserted into the positioning groove to lock the rotary plate body 410. Based on the above settings, the mold 600 can be in a stable state during the injection molding process, thereby improving the injection molding effect of the thick-walled light guide element.

The telescopic member may include a hydraulic cylinder, a pneumatic cylinder or an electric telescopic rod, and the like, as long as the function of linear driving can be realized, which is not limited here.

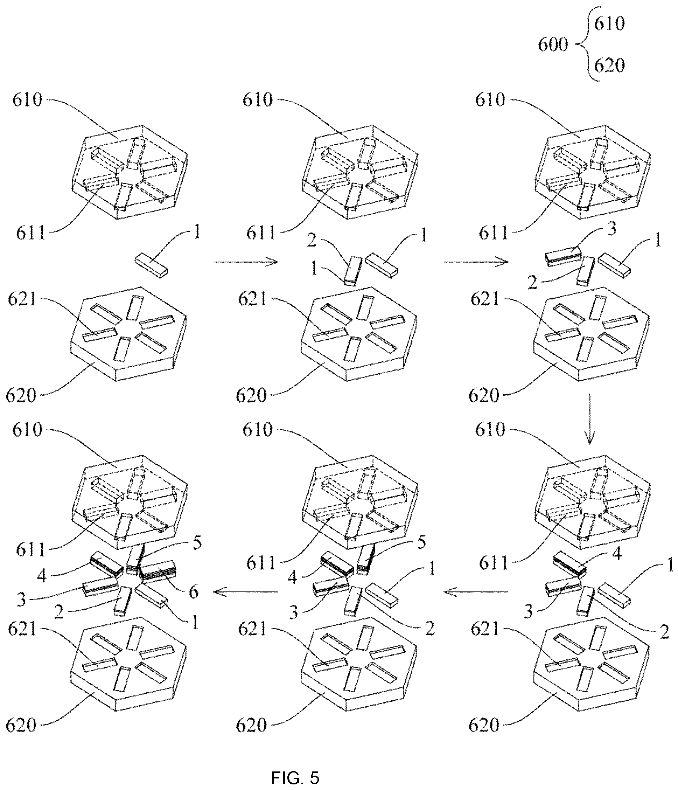

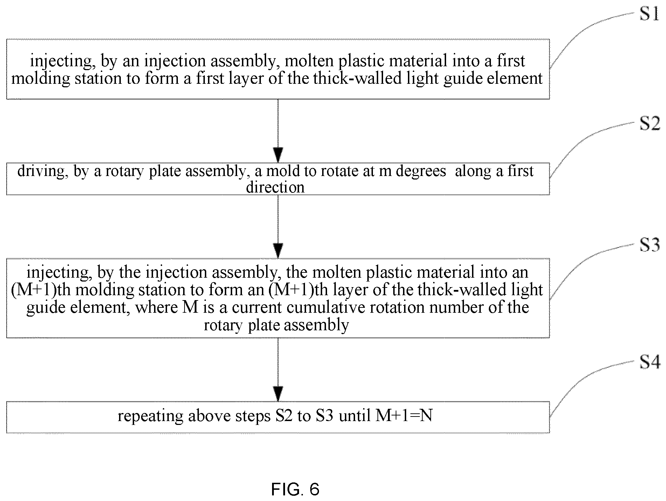

Correspondingly, as shown in FIG. 1, FIG. 2, FIG. 5 and FIG. 6, embodiments of the present application also provide an injection molding method for the thick-walled light guide element, applied to an injection molding device for the thick-walled light guide element as mentioned in any of the above embodiments.

The injection molding method for the thick-walled light guide element includes following steps.
S1, injecting, by an injection assembly 100, molten plastic material into a first molding station to form a first layer 1 of the thick-walled light guide element;
S2, driving, by a rotary plate assembly 400, the movable mold 620 to rotate at m degrees along a first direction;
S3, injecting, by the injection assembly 100, the molten plastic material into an (M+1)th molding station to form an (M+1)th layer of the thick-walled light guide element, where M is a current cumulative rotation number of the rotary plate assembly 400;
S4, repeating above steps S2 to S3 until M+1=N.

In this embodiment, when the injection assembly 100 supplies plastic materials to each molding station for the first time through the injection station 210, a layer of the thick-walled light guide element can be formed in each molding cavity corresponding to each molding station. After the layer of the thick-walled light guide element is cooled, the rotary plate assembly 400 drives the movable mold 620 to rotate at m° along the first direction, so that each mold cavity moves to the next molding station, and then the injection assembly 100 continues to supply plastic materials to each molding station through the injection station 210 for the second time. Since a layer of the thick-walled light guide element has been molded in the molding cavity, with the second supply of plastic materials, a second layer of the thick-walled light guide element can be formed in each molding cavity, and the second layer of the thick-walled light guide element covers the surface of the previous layer of the thick-walled light guide element. As the layer of the thick-walled light guide element is cooled, the second layer of the thick-walled light guide element will be integrated with the previous layer of the thick-walled light guide element. The rotary plate assembly 400 continues to drive the movable mold 620 to rotate at m° along the first direction, so that each molding cavity moves to the next molding station, and then the injection assembly 100 continues to supply the plastic material to each molding station through the injection station 210 for the third time. Since two layers of the thick-walled light guide element have been molded in the molding cavity, with the third supply of plastic materials, a third layer of the thick-walled light guide element can be formed in each molding cavity, and the third layer of the thick-walled light guide element can cover the surface of the first two layers of the thick-walled light guide element. As the layer of the thick-walled light guide element is cooled, the third layer of the thick-walled light guide element will be integrated with the first two layers of the thick-walled light guide element. The rotary plate assembly 400 continues to drive the movable mold 620 to rotate at m° along the first direction and repeats the above-mentioned layered injection molding operations until that the thick-walled light guide product with N layers of the thick-walled light guide element is molded in the molding cavity of the Nth molding station. In this case, the thick-walled light guide product can be taken out from the molding cavity.

**It** can be seen that the injection molding method for the thick-walled light guide element in this embodiment can form multiple molding stations by arranging the rotary plate assembly 400 on the movable mold plate 300 and using the rotary plate assembly 400 to drive the movable mold 620 to rotate relative to the fixed mold plate 200. In this way, the injection assembly 100 can be used to inject molten plastic material into each molding station through the injection station 210 at the fixed mold plate 200. Each time the mold 600 rotates at a fixed angle, an injection is performed. A layer of the thick-walled light guide element can be formed on the mold 600 each injection. When the mold 600 rotates at a fixed angle for N times, a thick-walled light guide product with N layers of the thick-walled light guide element can be formed at the mold 600, thereby realizing the multi-layer injection molding of the thick-walled light guide element, which is not limited to the conventional two-layer injection molding method, thereby shortening the overall molding cycle and reducing production costs.

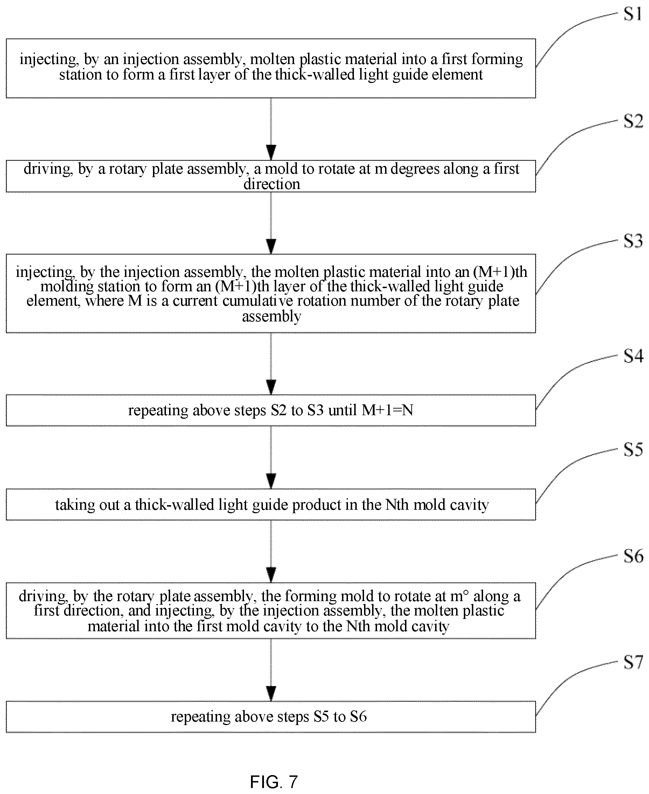

In an embodiment, as shown in FIG. 1, FIG. 2, FIG. 5 and FIG. 7, the N molding stations are respectively provided with the first mold cavity to the Nth mold cavity, and the first mold cavity to the Nth mold cavity are respectively used for forming one layer of the thick-walled light guide element, and at least two injection stations 210 inject the plastic material into the first mold cavity to the Nth mold cavity through the hot runner of the mold 600. The depth of the first mold cavity to a depth of the Nth mold cavity shows a gradually increasing trend. Each layer of the thick-walled light guide element rotates along with the rotary plate assembly 400.

The step S1, injecting, by an injection assembly 100, molten plastic material into the first molding station includes:
S11, injecting, by the injection assembly 100, the molten plastic material into the first mold cavity.

The step S3, injecting, by the injection assembly 100, the molten plastic material into the (M+1)th molding station includes:
S31, injecting, by the injection assembly 100, molten plastic material into the first mold cavity, and injecting molten plastic material into a mold cavity from the second to the Nth mold cavity where the layer of the thick-walled light guide element exists.

In an embodiment, as shown in FIG. 1, FIG. 2, FIG. 5 and FIG. 7, the first mold cavity to the Nth mold cavity are equally distributed along the peripheral direction.

After the step S4, repeating above steps S2 to S3 until M+1=N, the injection molding method includes:
S5, taking out a thick-walled light guide product in the Nth mold cavity;
S6, driving, by the rotary plate assembly 400, the movable mold 620 to rotate at m° along a first direction, and injecting, by the injection assembly 100, the molten plastic material into the first mold cavity to the Nth mold cavity; and
S7, repeating above steps S5 to S6.

In this embodiment, the depth of the first mold cavity to a depth of the Nth mold cavity shows a gradually increasing trend, which should be understood that the depth of the mold cavity gradually increases in one or more directions, so that the shape of each mold cavity matches the outer contour of the layer of the thick-walled light guide element that needs to be formed in the mold cavity.

In practical applications, the mold 600 usually includes a fixed mold 610 and a movable mold 620, the fixed mold 610 is fixed at the fixed mold plate 200, and the movable mold 620 is fixed at the movable mold plate 300, so that the mold cavity may include a fixed mold cavity 611 provided at the fixed mold 610 and the movable mold cavity 621 provided at the movable mold 620. When the fixed mold 610 is clamped with the movable mold 620, the fixed mold cavity 611 and the movable mold cavity 621 can enclose to form a complete mold cavity for injection molding. Based on this structural arrangement, the depth of the first mold cavity to a depth of the Nth mold cavity shows a gradually increasing trend, which should be understood that the depth of the fixed mold cavity 611 gradually increases.

Taking the thick-walled light guide element divided into six layers for injection molding as an example, N is six and m is 60°. Based on this, the specific injection molding process of the thick-walled light guide element is described in detail as follows.

In the initial state, there is no injection molding in all mold cavities. First, the fixed mold 610 is clamped with the movable mold 620, and then the first mold cavity with the shallowest depth is filled with plastic materials through the injection station 210, the pressure is maintained and the first mold cavity is cooled, to form the first layer 1 of the thick-walled light guide element in the first mold cavity. Then the fixed mold 610 is separated from the movable mold 620, and the movable mold 620 is driven to rotate at 60° along the first direction through the rotary plate assembly 400, so that the first layer 1 of the thick-walled light guide element can move to the second molding station along with the movable mold cavity 621, and then the fixed mold 610 is clamped with the movable mold 620. After the molds are clamped, the mold cavity where the first layer 1 of the thick-walled light guide element is located is the second mold cavity, since the depth of the second mold cavity is deeper, an injection molding area is formed between the cavity wall of the second mold cavity and the first layer 1 of the thick-walled light guide element. The shape of the injection molding area corresponds to the outer contour of the subsequent second layer 2 of the thick-walled light guide element, and the mold cavity at the first molding station is still the first mold cavity. In this case, the first mold cavity and the second mold cavity are filled with plastic materials through the injection station 210. The pressure is maintained and the first mold cavity and the second mold cavity are cooled to form a first layer 1 of the thick-walled light guide element in the first mold cavity, and form a second layer 2 of the thick-walled light guide element in the second mold cavity. The second layer 2 of the thick-walled light guide element in the second mold cavity covers the surface of the first layer 1 of the thick-walled light guide element and is integrated with the first layer 1 of the thick-walled light guide element. Then the fixed mold 610 and the movable mold 620 are separated, and the rotary plate assembly 400 drives the movable mold 620 to rotate at 60° along the first direction, so that the two layers of the thick-walled light guide element in the second molding station move to the third molding station along with the movable mold cavity 621, and one layer of the thick-walled light guide element in the first molding station move to the second molding station along with the movable mold cavity 621. Then the fixed mold 610 is clamped with the movable mold 620. After the molds are clamped, the mold cavity where the two layers of the thick-walled light guide element are located on the third group of molding station is the third mold cavity. Since the depth of the third mold cavity is deeper, an injection molding area is formed between the cavity wall of the third mold cavity and the two layers of the thick-walled light guide element. The shape of the injection molding area corresponds to the outer contour of the subsequent third layer of the thick-walled light guide element. In this case, the first mold cavity, the second mold cavity, and the third mold cavity are filled with plastic materials through the injection station 210, and the pressure is maintained and the first mold cavity, the second mold cavity, and the third mold cavity are cooled to form the first layer 1 of the thick-walled light guide element in the first mold cavity, a second layer 2 of the thick-walled light guide element in the second mold cavity, and a third layer 3 of the thick-walled light guide element in the third mold cavity. The third layer 3 of the thick-walled light guide element in the third mold cavity covers the surface of the first two layers of the thick-walled light guide element and is integrated with the first two layers of the thick-walled light guide element. The second layer 2 of the thick-walled light guide element in the second mold cavity covers the surface of the first layer 1 of the thick-walled light guide element, and is integrated with first layer 1 of the thick-walled light guide element. Then the molds continues to be separated and the movable mold 620 is driven to rotate at 60° along the first direction through the rotary plate assembly 400 to repeat the above injection molding operations and sequentially form the fourth layer 4 of the thick-walled light guide element and the fifth layer 5 of the thick-walled light guide element. After the rotary plate rotates for five times, the first to the sixth mold cavities are filled with plastic materials. In this case, the sixth mold cavity is provided with the first layer 1 of the thick-walled light guide element, the second layer 2 of the thick-walled light guide element, the third layer 3 of the thick-walled light guide element, the fourth layer of the thick-walled light guide element 4, the fifth layer of the thick-walled light guide element 5, and the sixth layer 6 of the thick-walled light guide element. These six layers of the thick-walled light guide element constitute the thick-walled light guide product. After the fixed mold 610 and the movable mold 620 are separated, the thick-walled light guide product can be taken out from the movable mold cavity 621 corresponding to the sixth molding station. Thus the layered injection molding process of a thick-walled light guide element can be finished. After the thick-walled light guide product is taken out from the movable mold cavity 621 corresponding to the sixth molding station, the movable mold cavity 621 is in the vacant state. In this case, the rotary plate assembly 400 continues to drive the movable mold 620 to rotate at 60° along the first direction, so that the vacant movable mold cavity 621 returns to the first group of molding station. In addition, the fifth layer of the thick-walled light guide element on the fifth molding station is moved to the sixth molding station, and then the molds are clamped and the above injection molding operation is repeated, so that the sixth layer 6 of the thick-walled light guide element in the sixth mold cavity covers the surfaces of the first five layers of the thick-walled light guide element, and is integrated with the first five layers of the thick-walled light guide element. In this case, the layered injection molding process of a thick-walled light guide element is finished in the sixth mold cavity. The molds can be separated and the thick-walled light guide product can be taken out from the movable mold cavity 621 corresponding to the sixth molding station, and the above-mentioned injection molding operation can be repeated subsequently. A thick-walled light guide product can be obtained every 60° rotation of the rotary plate assembly 400, and all mold cavities only need to be filled with plastic materials after each subsequent mold clamping. In this way, the rotation cycle characteristics of the rotary plate assembly 400 can be fully utilized to realize layered injection molding and continuous production of the thick-walled light guide element in a smaller space.

The operation of taking out the thick-walled light guide product from the movable mold cavity 621 can be achieved by using an ejection mechanism or a mechanical clamp, which is not limited here.

It should be noted that other contents of the injection molding device for the thick-walled light guide element and the injection molding method for the thick-walled light guide element disclosed in the present application can refer to the related art, which will not be repeated here.

The above are only some embodiments of the present application, and do not limit the scope of the present application thereto. Under the concept of the present application, any equivalent structural transformation made according to the description and drawings of the present application, or direct/indirect application in other related technical fields shall fall within the claimed scope of the present application.

## Claims

1. An injection molding device for a thick-walled light guide element, **characterized by** comprising:
an injection assembly configured to melt and inject plastic material;
a fixed mold plate provided with at least two injection stations along a horizontal direction, wherein the injection assembly is configured to inject the plastic material into the at least two injection stations; and
a movable mold plate provided with a rotary plate assembly, wherein a mold is installed at the rotary plate assembly, the rotary plate assembly is configured to drive the mold to rotate at a fixed angle to form a first molding station to an Nth molding station, N is a natural number greater than 1, and a cumulative rotation angle of the rotary plate assembly is 360 °,
the at least two injection stations are configured to supply the plastic material to each molding station to produce each layer of the thick-walled light guide element, the Nth molding station is configured to form an Nth layer of the thick-walled light guide element, the Nth layer of the thick-walled light guide element formed at the Nth molding station covers an (N-1)th layer of the thick-walled light guide element formed at an (N-1)th molding station, the Nth layer of the thick-walled light guide element is integrated with the (N-1)th layer of the thick-walled light guide element.

2. The injection molding device for the thick-walled light guide element according to claim 1, wherein:
the first molding station to the Nth molding station are respectively provided with a first mold cavity to an Nth mold cavity, and the first mold cavity to the Nth mold cavity are respectively configured to produce a layer of the thick-walled light guide element, and the at least two injection stations are configured to inject the plastic material into the first mold cavity to the Nth mold cavity through a hot runner of the mold.

3. The injection molding device for the thick-walled light guide element according to claim 2, wherein a depth of the first mold cavity gradually increases to a depth of the Nth mold cavity.

4. The injection molding device for the thick-walled light guide element according to claim 1, wherein:
the injection assembly comprises a first injection mechanism and a second injection mechanism, and the injection stations comprise a first injection station and a second injection station;
the first injection mechanism is configured to inject the plastic material into the first injection station, and the second injection mechanism is configured to inject the plastic material into the second injection station; and
the first injection station is communicated with the first molding station and the Nth molding station, and a second injection station is communicated with a second molding station to the (N-1)th molding station.

5. The injection molding device for the thick-walled light guide element according to claim 1, wherein the first molding station to the Nth molding station are equally distributed in a peripheral direction.

6. The injection molding device for the thick-walled light guide element according to claim 1, wherein each layer of the thick-walled light guide element rotates with the rotary plate assembly.

7. The injection molding device for the thick-walled light guide element according to claim 1, wherein:
the rotary plate assembly comprises a rotary plate body, a driving assembly and a positioning assembly; and
the mold is installed at the rotary plate body, and the driving assembly is connected to the rotary plate body, the driving assembly is configured to drive the rotary plate body to rotate, and the positioning assembly is configured to abut against the rotary plate body in response to that the rotary plate body rotates to a preset position, to prevent the rotary plate body from rotating.

8. An injection molding method for a thick-walled light guide element, applied to an injection molding device for the thick-walled light guide element according to any one of claims 1 to 7, **characterized by** comprising:
S1, injecting, by an injection assembly, molten plastic material into a first molding station to produce a first layer of the thick-walled light guide element;
S2, driving, by a rotary plate assembly, a mold at m degrees along a first direction;
S3, injecting, by the injection assembly, molten plastic material into an (M+1)th molding station to produce an (M+1)th layer of the thick-walled light guide element, wherein M is a cumulative rotating number of the rotary plate assembly; and
S4, repeating above steps S2 to S3 until M+1=N.

9. The injection molding method for the thick-walled light guide element according to claim 8, wherein:
the first molding station to the Nth molding station are respectively provided with a first mold cavity to an Nth mold cavity, the first mold cavity to the Nth mold cavity are respectively configured to produce a layer of the thick-walled light guide element, and at least two injection stations are configured to inject the plastic material into the first mold cavity to the Nth mold cavity through a hot runner of the mold, a depth of the first mold cavity gradually increases to a depth of the Nth mold cavity, each layer of the thick-walled light guide element rotates with the rotary plate assembly;
the step S1, injecting, by the injection assembly, molten plastic material into the first molding station comprises:
S11, injecting, by the injection assembly, molten plastic material into the first mold cavity, and
the step S3, injecting, by the injection assembly, molten plastic material into the (M+1)th molding station comprises:
S31, injecting, by the injection assembly, molten plastic material into the first mold cavity, and injecting molten plastic material into a mold cavity from the second mold cavity to the Nth mold cavity where a thick-walled light guide layer is present.

10. The injection molding method for the thick-walled light guide element according to claim 9, wherein:
the first mold cavity to the Nth mold cavity are equally distributed along a peripheral direction, and
after the step S4, repeating above steps S2 to S3 until M+1=N,comprises:
S5, taking out a thick-walled light guide product in the Nth mold cavity;
S6, driving, by the rotary plate assembly, the mold at m degrees along the first direction, and injecting, by the injection assembly, molten plastic material into the first mold cavity to the Nth mold cavity; and
S7, repeating above steps S5 to S6.
